# EUROPEAN PATENT SPECIFICATION

(11) **EP 1 914 441 B1**
(45) Date of publication and mention of the grant of the patent: **05.09.2012**
(21) Application number: 07075622.6
(22) Date of filing: 20.07.2007
(51) Int. Cl.: F16F 1/38, B60G 9/00, B60G 11/46

(54) **Fitting of a flexible sleeve with a bushing in the mounting eye of a spring**
Einpassung von einer flexiblen Hülse mit einer Buchse in einem Federauge
Assemblage d'un manchon avec une douille flexible dans l'oeillet d'un ressort

(30) Priority: 28.07.2006 NL 1032252
(43) Date of publication of application: 23.04.2008
(73) Proprietor: VDL Weweler B.V., 7332 AP Apeldoorn (NL)
(72) Inventor: Aalderink, Derk Geert, 7245 NV Laren (NL); Zantinge, Johan Michiel, 6991 HK Rheden (NL)
(74) Representative: Houben, Christiaan Hein Willem Frans

(56) References cited:
- EP-A- 1 132 244
- JP-A- 55 051 142
- JP-A- 56 076 739
- JP-A- 2001 241 505

## Description

The invention relates to a method for fitting a bush provided with a flexible sleeve in an eye of a longitudinal supporting arm of a vehicle wheel axle suspension, in which the bush is axially introduced into the eye.

A bush of this type which is provided with a flexible, usually rubber, outer sleeve is also known as a silent block in the field. It is known from the prior art to push such a bush into the eye of the supporting arm by means of a movement which only takes place in the axial direction. During the pushing operation, the outside of the flexible sleeve acts on the inside of the eye, as a result of which the flexible sleeve deforms axially. As soon as the axial introduction movement has been completed and the bush is released, the flexible sleeve will spring back slightly. As a result, it is difficult to place the bush centrally in the eye in an accurate way with respect to the centre line of the supporting arm. During the introduction, the bush therefore has to be pushed in slightly further than the centre line, following which it springs back to the desired central position.

The eye of a supporting arm is usually made by heating and subsequently bending the respective supporting arm end. This method of producing the eye results in a certain degree of dimensional tolerance, which leads to a slightly different introduction resistance for each spring. Consequently, it is not possible to automate the introduction procedure and ensure accurate positioning at the same time. In practice, therefore, the experience and expertise of an individual is relied upon to introduce the bush into the eye by means of a pressing machine.

One of the possible solutions could be to remachine the eyes, so that they have exactly the same inner diameter and the bush in each spring eye thus has to be pushed equally far. However, remachining of the eye is laborious and increases the costs.

Another known method of fitting the bush in the eye is to shoot the bush into the eye. Due to this quick movement, the flexible material (rubber) of the sleeve will exhibit a so-called memory effect to a lesser degree and will thus spring back to a lesser degree. However, it has been found that this method does not result in the desired accurate positioning of the bush in the eye.

In JP56076739 is disclosed a method to introduce an inside member in an outside member with a bore in which a rubber ring like element is arranged. The inner element is inserted in the rubber element an initial distance after which a pressurized fluid is introduced into the cavity under the inner element. Upon further introduction of the inner element in the rubber ring, an upper portion of the rubber ring deforms such that a gap is formed through which the fluid can escape.

In JP 2001241505 is disclosed a method to insert an inside pipe with a rubber elastic body fixed on its outside, in a retaining part which is formed as an eye. The retaining structure is of the press fit type.

In JP 55051142 is disclosed another way to insert an inner bushing with a rubber sleeve in an outer cylindrical means. The bushing with rubber sleeve is press fitted into the outer cylindrical means via a guide cylinder having a concentric inwardly tapered through hole.

It is an object of the invention to provide an improved method in order to fit the bush provided with a flexible sleeve into the eye of a supporting arm.

This object is achieved according to the invention by a method according to claim 1.

By simultaneously axially moving and rotating the bush, the circumference of the sleeve carries out a kind of screw movement with respect to the inside of the eye. As a result thereof, the bush will not spring back in the axial direction, but only in the tangential direction, when it is released after introduction into the eye. However, this does not cause any problems with regard to the positioning of the bush in the eye.

Preferably, a lubricant, for example soap, is applied to the inside of the eye before the bush is introduced. This facilitates the rotation of the flexible sleeve with respect to the eye.

As mentioned above, the eye of a supporting arm is usually produced by heating and subsequently bending the supporting arm end concerned. With this method, there always remains a gap between the end edge of the supporting arm and the start of the eye. According to a preferred embodiment of the method according to the invention, the bush is rotated in the same direction as the bending direction by means of which the eye of the supporting arm was formed. This ensures that the flexible sleeve smoothly slides along the gap and prevents the flexible sleeve from being damaged by the end edge of the spring arm.

The invention furthermore relates to a device for introducing a bush provided with a flexible sleeve into an eye of a longitudinal supporting arm for a vehicle wheel axle suspension, comprising positioning means for positioning the supporting arm, as well as a mandrel provided with coupling means, which mandrel is designed to be inserted into the bush and connected to the bush by the coupling means and is designed to carry out an axial movement through the eye and a rotating movement simultaneously.

The invention will be explained in more detail with reference to the drawing, in which:
Fig. 1 shows a side view of a wheel axle suspension,
Fig. 2 shows a part of the wheel axle suspension from Fig. 1 in exploded view,
Fig. 3 shows a cross-sectional view of the supporting arm at the eye, and
Fig. 4 diagrammatically shows the introduction of a bush with a flexible sleeve into an eye of a supporting arm.

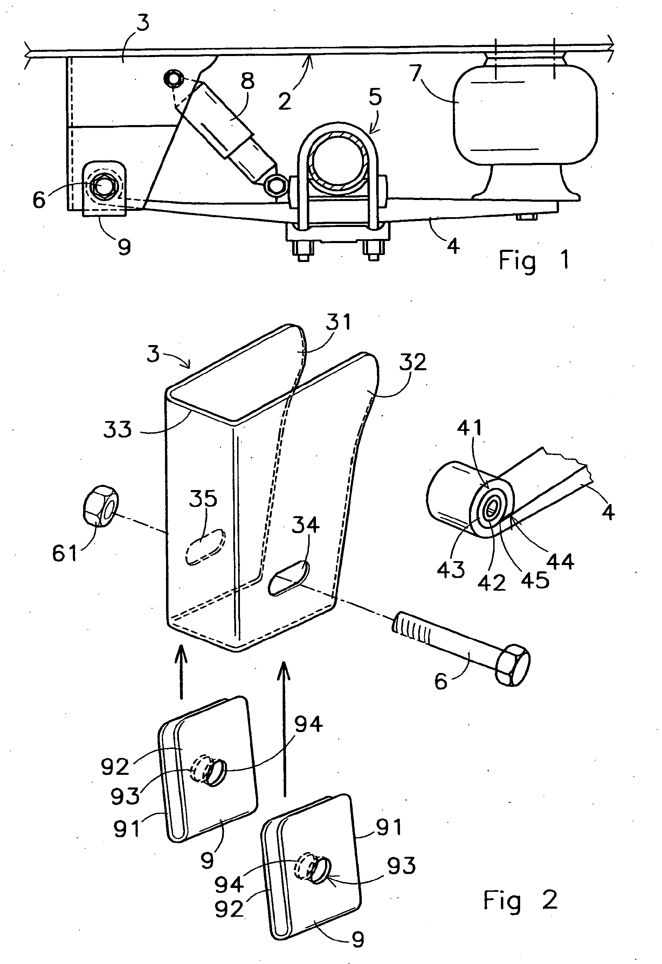

Fig. 1 diagrammatically shows a wheel axle suspension of an axle pair of a vehicle. The wheel axle is denoted by reference numeral 1. The wheel axle 1, to which wheels are fitted on either end, is shown as a hollow round axle, but could also have any other shape, such as for example square. The vehicle is usually provided with a wheel axle suspension on both sides.

The wheel axle suspension comprises a supporting bracket 3 which is attached to the chassis 2 of the vehicle and is also referred to as a spring carrier arm. The wheel axle suspension furthermore comprises a supporting arm 4 for the wheel axle 1, which supporting arm 4 is pivotably attached to the supporting bracket 3 and extends in the longitudinal direction. In the illustrated example, the supporting arm 4 is designed as a parabolic spring. The wheel axle 1 is fixedly secured to the supporting arm 4, in a manner which is known per se, by means of a U-shaped clamp 5.

The supporting arm 4 is attached to one end of the supporting bracket 3 by means of a securing bolt 6. On the other end, the supporting arm is attached to a pneumatic spring 7 which is arranged between the supporting arm 4 and the chassis 2. In the illustrated embodiment, a shock absorber 8 is also arranged between the supporting arm 4 and the supporting bracket 3.

The attachment of the supporting arm 4 to the supporting bracket 3 is explained further with reference to Fig. 2. The supporting bracket 3 comprises two side plates 31 and 32. The side plates 31 and 32 are connected to one another by a front plate 33 and the supporting bracket 3 is open towards the back in the direction of travel. The securing bolt 6 extends through the supporting bracket 3 in the transverse direction and projects through slotted holes 34 and 35, respectively, which run substantially in the direction of the longitudinal supporting arm and are provided in the side plates 31 and 32, respectively.

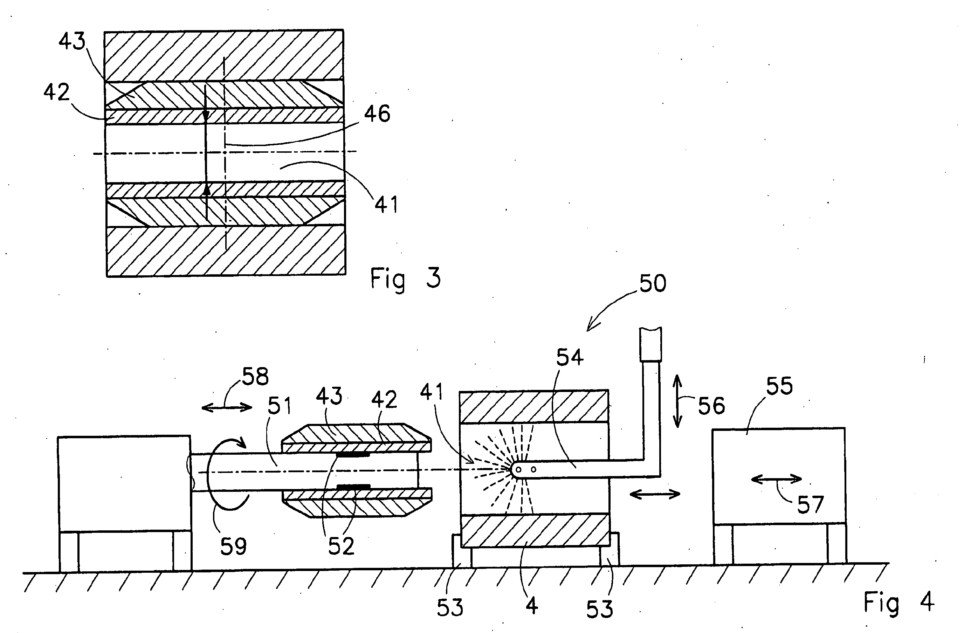

At the end which is attached to the supporting bracket 3, the supporting arm is bent (clockwise in the drawing) so that a securing eye 41 is formed. When the supporting arm 4 is bent to form an eye 41, there always remains a gap 44 between the end edge 45 of the supporting arm 4 and the start of the eye. A bush 42, preferably made of steel, is provided in the eye 41. A flexible sleeve 43, preferably made of rubber, is arranged between the bush 42 and the eye 41. The rubber sleeve 43 may be connected to, for example, the bush 42 by means of vulcanization. Fig. 3 shows a cross section through the supporting arm 4 at the eye 41. As can be seen, viewed in the transverse direction, the bush 42 with the flexible sleeve 43 is provided in the centre of the eye, that is to say, symmetrically with respect to the centre line 46 of the supporting arm 4. This accurate centring of the bush 42 with respect to the flexible sleeve 43 in the transverse direction of the supporting arm ensures that the bush 42 protrudes slightly outside the eye 41 of the supporting arm 4 on both sides. As a result thereof, the bush 42 can be clamped tightly between the side plates 31 and 32 of the supporting bracket 3 by means of the securing bolt 6 and nut 61 in the fitted state of the supporting arm 4.

Around the underside of the side plates 31, 32 of the supporting bracket 3, adjustment elements 9 are preferably provided. In the illustrated embodiment, these adjustment elements 9 are substantially U-shaped in cross section and comprise substantially parallel wearing plates 91 and 92, respectively, with holes 93 and 94, respectively, which are in line with one another. In the fitted state, the wearing plates 91 and 92 are on either side of the respective side plates 31, 32 of the supporting bracket 3, and the holes 93, 94 provided therein are at the slotted holes 34, 35. The securing bolt fits through these holes 93 and 94. The adjustment elements 9 have a two-fold purpose.

On the one hand, the adjustment element 9 serves to transfer the clamping force produced by the securing bolt 6 and the nut 61 in an even manner to the bush 42. On the other hand, the adjustment bracket serves to adjust the position of the securing bolt 6 in the slotted holes 34 and 35 and thus the position of the point of attachment (pivoting point) of the supporting arm 4 in the longitudinal direction of the vehicle. This adjustment is necessary in order to be able to align the axle 1 of the vehicle.

Fig. 4 diagrammatically shows how the bush 42 is fitted in the eye 41 by means of a device 50 intended for the purpose. The device comprises a mandrel 51 which can be inserted in the bush 42. The mandrel 51 is provided with clamping elements 52 which move radially outwards after the bush 42 has been fitted around the mandrel 51 and act on the inside of the bush 42, thus coupling the latter tightly to the mandrel 51.

The device 50 furthermore has positioning means 53 in order to position the supporting arm 4 with respect to the mandrel 51. The device 50 has a spray member 54 by means of which a lubricant, such as soap, can be sprayed against the inside of the eye 41. The device 50 furthermore comprises a stop member 55 which can be placed against the supporting arm 4 at the location of the eye.

Fitting the bush 42 with the rubber sleeve 43 which has been vulcanized thereon is effected as follows:

The bush 42 is placed on a mandrel 51, whereupon the clamping elements 52 move from a retracted position radially outwards into the clamping position, after which the bush 42 is connected to the mandrel. The supporting arm 4 is placed in the positioning means 53 and fixed so that the centre line of the eye 41 is in line with the centre line of the mandrel 51. The next stages of introducing the bush 42 into the eye 41 are preferably carried out in an automated manner.

In a first stage, the spray member 54 is introduced into the eye from that side of the supporting arm 4 which is opposite the mandrel, and soap is sprayed all around the inside of the eye through spray nozzles in the spray member 54. This stage is illustrated in particular in Fig. 4. Subsequently, the spray member 54 is withdrawn from the eye and moved away in the transverse direction (indicated by a double arrow 56).

In the next stage, the stop member 55 is moved in the axial direction (indicated by a double arrow 57) towards the eye 41 of the supporting arm 4. From the other side, the mandrel 51 with the bush 42 fitted thereon is moved in the axial direction (indicated by double arrow 58) as far as into the eye 41 and simultaneously rotated about the axial axis (indicated by arrow 59). The direction of rotation of the mandrel 51 is the same as the direction in which the eye 41 has been bent. This ensures that the outside of the rubber sleeve 43 slides smoothly along the end edge 45 and the gap 44 and does not become damaged.

The bush 42 and the sleeve 43 are moved into the eye 41 axially until the free end of the bush 42 touches the stop member 55. At that moment, the bush 42 has reached the correct position in the eye 41 with respect to the centre line 46 and the clamping elements 52 are moved radially inwards into the retracted position, after which the mandrel 51 is withdrawn from the bush 42 and the stop member 55 is moved in the opposite direction, away from the eye.

The supporting arm 4 can then be removed from the positioning elements 53 by an individual or a robot, so that the device 50 is ready to receive another supporting arm 4 and bush 42.

When the clamping elements 52 are moved into the retracted position, the bush 42 is disconnected from the mandrel 51 and the deformation of the rubber sleeve 43 caused by the introduction of the bush 42 into the eye 41 will cause the bush 42 to turn slightly into the direction opposite that direction in which the mandrel 51 turned during the introduction into the eye 41. However, the bush 42 will not move in its axial direction once the mandrel 51 has been disconnected, as a result of which the desired positioning of the bush 42 in the eye 41 with respect to the centre line 46 of the arm 4 is ensured.

## Claims

1. Method for fitting a bush (42) provided with a flexible sleeve (43) in an eye (41) of a longitudinal supporting arm (4) for a vehicle wheel axle suspension, in which the bush (42) is axially introduced into the eye (41), **characterized in that** the bush (42) is rotated at the same time as the axial introduction movement is performed, wherein the bush (42) is fitted on a mandrel (51) and connected thereto in order to be introduced into the eye (41) with the mandrel (51), and wherein the mandrel (51) is disconnected from the bush (42) following the introduction of the bush (42) into the eye (41) and withdrawn.

2. Method according to claim 1, in which the bush (42) is stopped by a stop member (55) on the side which is opposite the introduction side of the eye (41).

3. Method according to one of the preceding claims, in which a lubricant, for example soap, is applied to the inside of the eye (41) before the bush (42) is introduced.

4. Method according to one of the preceding claims, in which the bush (42) is rotated in the same direction as the bending direction by means of which the eye (41) of the supporting arm (4) was formed.

5. Device (50) for introducing a bush (42) provided with a flexible sleeve (43) into an eye (41) of a longitudinal supporting arm (4) for a vehicle wheel axle suspension, comprising positioning means (53) for positioning the supporting arm (4), as well as a mandrel (51) provided with coupling means (52), which mandrel (51) is designed to be inserted into the bush (42) and connected to the bush (42) by the coupling means (52) and is designed to carry out an axial movement through the eye (41) and a rotating movement simultaneously.

6. Device according to claim 5, in which the device (50) comprises a stop member (55) which is designed to be positioned on a side of the eye (41) in order to stop the bush (42) inserted into the eye (41).

7. Device according to claim 5 or 6, in which the device (50) comprises spray means (54) for spraying a lubricant into the eye (41) of a supporting arm (4) positioned in the positioning means (53).

## Patentansprüche

1. Ein Verfahren für den Einbau einer mit einer elastischen Hülse (43) versehenen Buchse (42) in eine Öse (41) eines Längstragarms (4) für die Achsaufhängung eines Fahrzeugrads, bei dem die Buchse (42) axial in die Öse (41) eingeführt wird, **dadurch gekennzeichnet, dass** die Buchse (42) zeitgleich mit der axialen Einführungsbewegung gedreht wird, wobei die Buchse (42) auf einen Dorn (51) gesteckt und mit diesem verbunden wird, so dass sie zusammen mit dem Dorn (51) in die Öse eingeführt werden kann, und wobei der Dorn (51) nach Einführung der Buchse (42) in die Öse (41) von der Buchse (42) getrennt und entfernt wird.

2. Verfahren nach Anspruch 1, wobei die Buchse (42) durch einen Anschlag (55) auf der der Einführungsseite der Öse (41) gegenüberliegenden Seite gestoppt wird.

3. Verfahren nach einem der vorangehenden Ansprüche, wobei ein Schmierstoff, beispielsweise Seife, auf die Innenseite der Öse (41) aufgebracht wird, ehe die Buchse (42) eingeführt wird.

4. Verfahren nach einem der vorangehenden Ansprüche, wobei die Buchse (42) in die gleiche Richtung gedreht wird, in die die Öse (41) des Tragarms (4) bei ihrer Herstellung gebogen wurde.

5. Vorrichtung (50) zur Einführung einer mit einer elastischen Hülse (43) versehenen Buchse (42) in eine Öse (41) eines Längstragarms (4) für die Achsaufhängung eines Fahrzeugrads, bestehend aus Mitteln (53) zur Positionierung des Tragarms (4) sowie aus einem mit Kupplungsvorrichtungen (52) versehenen Dorn (51), wobei der Dorn so konstruiert ist, dass er in die Buchse (42) eingeführt und mit Hilfe der Kupplungsvorrichtungen (52) mit der Buchse (42) verbunden werden kann, und dass er eine axiale Bewegung durch die Öse (41) und eine gleichzeitige Drehbewegung ausführen kann.

6. Vorrichtung nach Anspruch 5, wobei die Vorrichtung (50) einen Anschlag (55) beinhaltet, der so konstruiert ist, dass er auf einer Seite der Öse (41) positioniert werden kann, um die in die Öse (41) eingeführte Buchse (42) zu stoppen.

7. Vorrichtung nach Anspruch 5 oder 6, wobei die Vorrichtung (50) Mittel (54) zum Sprühen eines Schmierstoffs in die Öse (41) eines in den Positionierungsmittein (53) befindlichen Tragarms (4) beinhaltet.

## Revendications

1. Procédé pour ajuster une douille (42) équipée d'un manchon flexible (43) dans un oeil (41) d'un bras de support longitudinal (4) pour une suspension d'essieu de roue de véhicule, selon lequel la douille (42) est introduite axialement dans l'oeil (41), **caractérisé en ce que** la douille (42) est tournée pendant que le mouvement d'introduction axial est réalisé, selon lequel la douille (42) est ajustée sur un mandrin (51) et couplée à celui-ci de sorte à être introduite dans l'oeil (41) avec le mandrin (51), et selon lequel le mandrin (51) est découplé de la douille (42) après l'introduction de la douille (42) dans l'oeil (41) et retiré.

2. Procédé selon la revendication 1, selon lequel la douille (42) est arrêtée par un élément d'arrêt (55) sur le côté qui est opposé au côté d'introduction de l'oeil (41).

3. Procédé selon l'une des revendications précédentes, selon lequel un lubrifiant, par exemple du savon, est appliqué à l'intérieur de l'oeil (41) avant que la douille (42) ne soit introduite.

4. Procédé selon l'une des revendications précédentes, selon lequel la douille (42) est tournée dans la même direction que la direction de la courbure par laquelle l'oeil (41) du bras de support (4) a été formé.

5. Dispositif (50) pour introduire une douille (42) équipée d'un manchon flexible (43) dans un oeil (41) d'un bras de support longitudinal (4) pour une suspension d'essieu de roue de véhicule, comprenant des moyens de positionnement (53) pour positionner le bras de support (4), ainsi qu'un mandrin (51) équipé de moyens de couplage (52), lequel mandrin (51) étant conçu pour être inséré dans la douille (42) et couplé à la douille (42) par des moyens de couplage (52) et étant conçu pour réaliser simultanément un mouvement axial à travers l'oeil (41) et un mouvement de rotation.

6. Dispositif selon la revendication 5, dans lequel le dispositif (50) comprend un élément d'arrêt (55) qui est conçu pour être positionné d'un côté de l'oeil (41) afin d'arrêter la douille (42) insérée dans l'oeil (41).

7. Dispositif selon la revendication 5 ou 6, dans lequel le dispositif (50) comprend des moyens de pulvérisation (54) pour pulvériser un lubrifiant dans l'oeil (41) d'un bras de support (4) positionné dans les moyens de positionnement (53).
